# FASCICULE DE BREVET EUROPEEN

(11) **EP 3 217 788 B1**
(45) Date de publication et mention de la délivrance du brevet: **26.12.2018**
(21) Numéro de dépôt: 15808710.6
(22) Date de dépôt: 05.11.2015
(51) Int. Cl.: A01M 13/00, A01M 17/00

(54) **FILM AUTOADHÉSIF POUR LA FUMIGATION DES SOLS**
SELBSTKLEBENDER FILM ZUR BODENBEGASUNG
SELF-ADHESIVE FILM FOR SOIL FUMIGATION

(30) Priorité: 10.11.2014 FR 1460834
(43) Date de publication de la demande: 20.09.2017
(73) Titulaire: Arkema France, 92700 Colombes (FR)
(72) Inventeur: FOUILLET, Thierry, 64230 Sauvagnon (FR)
(86) Numéro de dépôt international: PCT/FR2015/052988
(87) Numéro de publication internationale: WO 2016/075392

(56) Documents cités:
- WO-A1-2009/144018
- WO-A1-2011/130504
- FR-A1- 2 979 521
- US-A- 5 401 118
- US-B1- 8 535 461

## Description

La présente invention concerne le domaine de la fumigation des sols, c'est-à-dire le traitement des sols ou des substrats de plantes (terreaux, tourbes, laine de roche...), en particulier les substrats destinés à l'agriculture, pour contrôler les nématodes, les champignons pathogènes, les mauvaises herbes, les insectes nuisibles ou les bactéries.

La technique de fumigation est aujourd'hui largement utilisée pour la désinfection des sols ou des substrats de plantes, notamment ceux destinés à l'agriculture intensive et notamment ceux destinés à l'arboriculture, à l'horticulture et au maraîchage.

Cette technique de fumigation met en oeuvre au moins un fumigant, généralement un composé pesticide volatil, qui est introduit dans le sol ou le substrat à traiter, selon diverses techniques connues de l'homme du métier, par exemple à l'aide de coutres, ou de buses d'injection dans le sol (« shank application » en langue anglaise), ou encore par goutte à goutte (« drip » en langue anglaise). Cette technique de fumigation comprend également la mise en oeuvre d'au moins un fumigant sous forme de gaz ou de brouillard, au-dessus du sol ou du substrat de plante à traiter.

Le fumigant diffuse dans le sol ou plus généralement dans le substrat à désinfecter, mais remonte également à la surface et peut se dissiper dans l'atmosphère. De grandes quantités de fumigant peuvent ainsi être perdues, entraînant une perte d'efficacité du produit utilisé. En outre, le fumigant ainsi dissipé dans l'atmosphère peut être gênant, voire toxique pour les agriculteurs et l'entourage à proximité immédiate des cultures et champs traités.

Pour pallier cet inconvénient, il est courant de recouvrir le sol traité par fumigation avec un film polymère imperméable aux vapeurs du fumigant, comme décrit par exemple dans EP0766913. Cette bâche plastique, imperméable aux gaz, empêche ledit fumigant de se disperser dans l'air au-dessus du sol ou du substrat à traiter. De cette manière, il existe un espace entre le sol ou substrat et le film polymère, dans lequel les vapeurs de fumigant sont concentrées, renforçant ainsi l'efficacité dudit fumigant. Différents types de films, tels que films polyéthylène, ou de type SIF (« semi-impermeable film » en langue anglaise), VIF (« virtually impermeable film » en langue anglaise), ou TIF (« totally impermeable film » en langue anglaise), sont aujourd'hui utilisés lors des traitements des sols ou substrats par fumigation.

Les films pour la désinfection des sols agricoles peuvent être classés en deux catégories selon la durée d'utilisation :
a) Catégorie 1 : protection « simple » : Ces films sont maintenus en place pendant la durée de désinfection requise du substrat à traiter, puis sont retirés avant la mise en culture. Cette catégorie comprend deux sous catégories, selon que les films sont assemblés ou non entre eux par collage :
   i) films mis en place sans collage, film sur film
   ii) films dont l'état de surface permet l'assemblage des lés par collage *in situ* ;
b) Catégorie 2 : protection et paillage : Les films de cette catégorie assurent tout d'abord une protection pendant la désinfection, puis sont maintenus en place comme films de paillage.

Dans la présente invention on s'intéresse plutôt à la première catégorie où les films sont assemblés entre eux, mais aussi à la deuxième catégorie, où les films peuvent également être assemblés entre eux.

Les films polymères sont avantageusement déposés sur le sol ou le substrat, avant ou après le traitement par fumigation, et laissés en place pendant la durée nécessaire pour permettre un contrôle efficace des nématodes, champignons phytopathogènes, mauvaises herbes, insectes nuisibles et autres bactéries. Après cette période de traitement, dont la durée dépend largement des sols ou substrats à traiter, des conditions climatiques, du type de culture envisagé, et autres, les films polymères peuvent être, le cas échéant, retirés ou simplement perforés, afin de permettre la plantation des cultures.

L'utilisation de films polymères dans les champs présente d'autres avantages tels que l'augmentation de la température du sol en particulier au début du printemps, la réduction des problèmes lies à l'apparition de mauvaises herbes, la conservation de l'humidité, la réduction du nombre de certains insectes ravageurs, les rendements plus élevés et une utilisation plus efficace des nutriments du sol.

La plupart des films de paillis sont généralement noirs pour le désherbage, blancs pour le refroidissement, ou clairs pour les désinfections de courte durée ou pour le chauffage du sol. La température du sol sous un paillis de plastique dépend des propriétés thermiques (réflexion, absorption ou transmission) du matériau particulier constitutif du film, par rapport au rayonnement solaire entrant.

Par exemple, les paillis noirs conservent l'humidité et la chaleur tout en préservant l'infestation par les mauvaises herbes. Le noir, couleur dominante utilisée dans la production de légumes, est un absorbeur opaque et un radiateur. Le paillis noir absorbe la plupart des longueurs d'ondes ultra-violettes (UV), visibles et infrarouges (IR) du rayonnement solaire incident et émet à nouveau une partie de l'énergie absorbée sous forme de rayonnement thermique ou infrarouge. Une grande partie de l'énergie solaire absorbée par le paillis de plastique noir est perdue dans l'atmosphère par rayonnement et par convection forcée.

En revanche, les films polymères transparents absorbent peu le rayonnement solaire, mais transmettent de 85% à 95% dudit rayonnement, avec une transmission relative qui est fonction de l'épaisseur et du degré d'opacité du film. La surface sous ces paillis polymères est généralement couverte de gouttelettes d'eau condensée. Cette eau est transparente pour le rayonnement à ondes courtes entrant, mais est opaque au rayonnement thermique infrarouge sortant, chaleur perdue dans l'atmosphère à partir d'un sol nu par rayonnement infrarouge mais qui est retenu par le paillis polymère transparent.

Les films blancs, quant à eux, peuvent entraîner une légère diminution de la température du sol par rapport à un sol nu, car ils réfléchissent, dans le couvert végétal, la majeure partie du rayonnement solaire incident. Ces paillis peuvent être utilisés pour établir une culture lorsque les températures du sol sont élevées comme par exemple dans les régions très ensoleillées et où toute réduction de la température du sol est bénéfique.

Il existe ainsi aujourd'hui une grande quantité de films polymères déjà largement utilisés dans l'agriculture, certains d'entre eux alliant des propriétés photocatalytiques, comme décrit par exemple dans la demande WO2013030513, et qui sont tout particulièrement adaptés à la fumigation des sols.

Une des difficultés toutefois liés à l'utilisation de ces films dits de fumigation est qu'ils nécessitent d'être positionnés, voire repositionnés, sur les sols de sorte à assurer une étanchéité la plus parfaite possible afin de retenir la totalité ou tout au moins la plus grande partie des gaz fumigants, en évitant le plus possible toute fuite de fumigant dans l'atmosphère, les autorités sanitaires d'un grand nombre de pays imposant maintenant que soit appliqué un film imperméable sur tout sol fumigé.

Ainsi, pour bâcher entièrement un sol préalablement fumigé, il est courant de répartir sur ledit sol des lés de films parallèles puis d'opérer une étanchéité entre lesdits lés de films, par collage bord à bord des lés entre eux. Le collage des lés entre eux est une technique maintenant largement connue et utilisée notamment pour le traitement par fumigation avec le bromure de méthyle, et est maintenant étendue aux traitements par fumigation avec d'autres agents fumigants.

Il est ainsi connu aujourd'hui de poser les films plastiques en les faisant se chevaucher légèrement l'un sur l'autre, par jointage ou collage selon plusieurs techniques différentes (cf. par exemple US4050972), et qui mettent en oeuvre divers types d'adhésifs parmi lesquels on peut citer :
- les adhésifs dilués dans un solvant, tels que par exemple les adhésifs à base de colophane dans le dichlorométhane ; ces types d'adhésifs solvantés imposent cependant la difficulté supplémentaire d'éliminer ensuite ledit solvant,
- les adhésifs dits « hot melt », comme décrit par exemple dans US8535461, mais qui nécessitent une mise en oeuvre à chaud et donc des opérations supplémentaires coûteuses et impliquant une main d'oeuvre supplémentaire importante.

Toutes ces techniques connues pour étanchéifier totalement un sol couvert par des lés de films de fumigation nécessitent donc une ou plusieurs opérations supplémentaires qui sont le plus souvent délicates voire difficiles à mettre en oeuvre, et qui génèrent des coûts supplémentaires et souvent rédhibitoires pour l'agriculteur qui doit de conformer aux normes et autorités de régulation de la culture par fumigation.

Il reste donc un besoin pour des films pour fumigation qui soient d'un usage aisé et notamment dont l'installation sur les champs et sols de culture en général, soit facilitée en particulier pour que l'étanchéité entre les lés de films soient facilement réalisée.

L'invention proposée ici permet de résoudre, en totalité ou tout au moins en partie, les inconvénients connus de l'art antérieur et notamment les difficultés rencontrées dans la réalisation de l'étanchéité des films pour fumigation. D'autres objectifs encore sont atteints grâce à la présente invention qui est maintenant détaillée dans la description qui suit.

Ainsi et selon un premier objet, la présente invention concerne l'utilisation pour le traitement des sols par fumigation d'un film barrière au fumigant présentant, sur au moins une partie de sa surface externe ou sur au moins une partie de sa surface interne ou sur au moins une partie de ses surfaces externe et interne, au moins une zone continue auto-collante ou auto-adhésive.

La présente invention propose ainsi l'utilisation pour le traitement par fumigation des sols d'au moins un film barrière, c'est-à-dire étanche aux vapeurs du fumigant, et possédant un pouvoir tackifiant sur la face interne et/ou externe du film, de sorte à créer au moins une zone continue autocollante, généralement continue et parallèle à la plus grande longueur du film, de sorte que les lés de film posés parallèlement les uns aux autres sur les sols assurent une étanchéité au fumigant. Selon un mode de réalisation de l'invention, la totalité de la surface externe ou interne du film constitue la zone auto-adhésive du film.

L'utilisation selon la présente invention permet de s'affranchir de la ou des étapes supplémentaires d'étanchéification par collage et/ou soudage entre eux des lés de film pour fumigation. Les films dits « auto-collants » utilisés dans la présente invention peuvent être posés selon les techniques classiques de pose de films dits de fumigation conventionnels et l'étanchéité au fumigant est assurée grâce aux propriétés du film « auto-collant » ou « auto-adhésif ». Il est également possible, afin d'assurer une étanchéité parfaite et un parfait collage des lés entre eux, d'effectuer une pression sur la zone continue auto-collante, cette pression pouvant être notamment réalisée lors de la pose du film pour fumigation, par tous moyens connus de l'homme du métier, et par exemple, et de manière non limitative, via un galet-presseur ou rouleau-presseur.

Selon un mode de réalisation préféré, l'invention concerne l'utilisation d'un film auto-adhésif qui peut être appliqué selon au moins l'une des techniques suivantes :
a) pose d'un lé de film barrière au fumigant et auto-adhésif, chevauchant un autre lé dudit film barrière au fumigant et auto-adhésif, en effectuant éventuellement une pression sur la zone de chevauchement, simultanément ou après la pose du ou des lés de film barrière au fumigant et auto-adhésif,
b) pose simultanée d'un lé de film barrière au fumigant classique (c'est-à-dire non auto-collant) et d'une petite bande de film barrière au fumigant et auto-adhésif, entre deux lés de film barrière au gaz classiques, c'est-à-dire non autocollant, en effectuant éventuellement une pression sur la petite bande de film auto-adhésif, simultanément ou après la pose du ou des lés de film barrière au fumigant,
c) pose alternée d'un lé de film barrière au fumigant et autocollant chevauchant un film barrière au fumigant classique (c'est-à-dire non auto-collant), en effectuant éventuellement une pression sur la zone de chevauchement, simultanément ou après la pose des lés de film barrière au fumigant.

L'invention concerne également le procédé d'étanchéification d'un sol destiné à un traitement par fumigation ou en cours de traitement par fumigation ou qui a été traité par fumigation, le dit procédé consistant à recouvrir la totalité ou au moins une partie dudit sol d'un film barrière au fumigant présentant au moins une zone continue auto-adhésive. De manière préférée, le procédé d'étanchéification d'un sol selon l'invention comprend l'une des trois techniques précédemment décrites sous a), b) ou c).

Par « film barrière au fumigant », on entend un film imperméable au fumigant, où l'imperméabilité est définie selon la norme NF T54-195-2:2014.

Il a été découvert de manière tout à fait surprenante qu'il est possible d'allier, dans un même film pour fumigation, les propriétés d'imperméabilité au fumigant et d'auto-adhésivité. En effet, il doit être compris que la zone auto-collante plus ou moins importante, voire totalement auto-collante notamment pour des raisons de simplicité de mise en oeuvre du film, doit également présenter le caractère « barrière au fumigant » requis pour tout film pour fumigation.

Ainsi l'utilisation selon la présente invention se caractérise par l'utilisation d'un film barrière au fumigant contenant au moins une zone continue autocollante, continue et parallèle à la plus grande longueur du film, sur au moins une partie de sa surface externe ou de sa surface interne ou sur ses surfaces externe et interne.

Des films auto-collants ou auto-adhésifs sont déjà connus et disponibles dans le commerce, dont certains sont utilisés aujourd'hui pour la fabrication de films étirables, notamment films de polyéthylène étirables, notamment pour l'emballage alimentaire, pour la protection des chargements de palettes, pour l'ensilage, et autres..., comme décrit par exemple dans la demande WO2013061264.

Les propriétés auto-adhésives de ces films sont le plus souvent obtenues par ajout dans les polymères qui composent ces films d'une quantité efficace d'un ou plusieurs agents collants ou agents « tackifiants ». Tous les agents tackifiants connus aujourd'hui peuvent être utilisés et, parmi ceux-ci, on peut avantageusement citer les dérivés de la colophane, les polyterpènes, les résines tackifiantes hydrocarbonées de faible masse moléculaire comme par exemple le poly(*iso*-butène), connu également sous son acronyme PIB.

Parmi les procédés de fabrication connus, on peut citer ceux mettant en oeuvre un mélange-maître (ou « master-batch » en langue anglaise) à base de polyoléfine comprenant un tackifiant, par exemple à base de polyéthylène (PE) contenant du PIB, le mélange-maître pouvant représenter entre 1% à 20% en poids, de préférence de 1% à 15% en poids, par rapport au poids total du film tackifiant.

Le PIB est par exemple communément utilisé aujourd'hui pour la fabrication de films auto-adhésifs tels que ceux listés ci-dessus pour la fabrication de films étirables, pour l'emballage alimentaire, pour la protection des chargements de palettes, pour l'ensilage, etc.

Les agents tackifiants qui peuvent être utilisés pour la préparation des films adaptés aux besoins de la présente invention, sont connus et aisément disponibles, généralement sous forme liquide, mais aussi et avantageusement sous forme de mélange-maître (ou « master-batch » en langue anglaise), c'est-à-dire dilués dans une matrice polymère, par exemple dans une matrice polyéthylène. L'agent tackifiant est ainsi avantageusement introduit sous sa forme master-batch dans le polymère lors de la fabrication du film plastique.

Les films utilisables dans le cadre de la présente invention peuvent être constitués d'une ou plusieurs couches. Au moins une couche est une couche contenant une quantité adaptée d'agent tackifiant, autrement dit une ou plusieurs des couches pouvant contenir chacune une quantité adaptée d'agent tackifiant. Par quantité adaptée on entend une quantité permettant une adhésion efficace du film sur lui-même ou sur tout autre film plastique barrière au gaz du fumigant, tout en permettant de décoller

Selon un mode de réalisation de l'invention, le film pour fumigation comprend au moins une couche comprenant un polymère choisi parmi les polyoléfines, les polyamides et les polyesters, et de préférence les polyoléfines, les polyamides et les polyesters bio-sourcés et/ou biodégradables. Par « polyoléfine » on entend, au sens de la présente invention, un polymère ou copolymère statistique ou à blocs, issu de la polymérisation, ou de la copolymérisation respectivement, de monomères qui sont des oléfines, de préférence choisies parmi l'éthylène, le propylène, le 1-butène, et autres, ainsi que leur mélanges.

À titre d'exemples de polyoléfines, on peut citer :
- les polymères à base de propylène, tels que les propylènes homopolymères, copolymères du propylène avec l'éthylène et/ou une oléfine comprenant de 4 à 10 atomes de carbone (ex. butène, pentène, hexène, et autres), les polypropylènes hétérophasiques ou leurs mélanges, ces polymères pouvant être obtenus par tout procédé connu de l'homme du métier, par exemple en suspension ou en phase gaz avec des catalyseurs de type Ziegler-Natta ou metallocène ;
- les polyéthylènes choisis parmi les homopolymères de l'éthylène ou les copolymères comprenant au moins 50% en moles d'éthylène et un ou plusieurs autres comonomères.

Selon un mode de réalisation préféré, une polyoléfine utilisable est le polyéthylène obtenu par polymérisation, de préférence homopolymérisation d'éthylène, mais aussi par copolymérisation avec une α-oléfine, et notamment une α-oléfine possédant de 2 à 30 atomes de carbone. À titre d'a-oléfine, on peut citer le propylène, le 1-butène, le 1-pentène, le 3-méthyl-1-butène, le 1-hexène, le 4-méthyl-1-pentène, le 3-méthyl-1-pentène, le 1-octène, le 1-décène, le 1-dodécène, le 1-tétradécène, le 1-hexadécène, le 1-octadécène, le 1-eicocène, le 1-dococène, le 1-tétracocène, le 1-hexacocène, le 1-octacocène, et le 1-triacontène.

À titre d'autres co-monomères des copolymères avec les polyoléfines décrites précédemment, on peut également citer :
- les diènes tels que par exemple le 1,4-hexadiène, l'éthylidène-norbornène, le butadiène,
- les esters d'acides carboxyliques insaturés tels que par exemple les acrylates d'alkyle ou les méthacrylates d'alkyle regroupés sous le terme « (méth)acrylates d'alkyles », les chaînes alkyles de ces (méth)acrylates pouvant comporter jusqu'à 30 atomes de carbone, avec comme exemples de chaînes alkyles : méthyle, éthyle, propyle, n-butyle, *sec*-butyle, *iso*-butyle, *tert-*butyle, pentyle, hexyle, heptyle, octyle, 2-éthylhexyle, nonyle, décyle, undécyle, dodécyle, tridécyle, tétradécyle, pentadécyle, hexadécyle, heptadécyle, octadécyle, nonadécyle, eicosyle, héneicosyle, docosyle, tricosyle, tétracosyle, pentacosyle, hexacosyle, heptacosyle, octacosyle, nonacosyle, triacontyle, les (méth)acrylates de méthyle, éthyle et butyles étant préférés,
- les acides carboxyliques insaturés et leurs sels, par exemple l'acide acrylique ou l'acide méthacrylique et les sels de ces mêmes acides,
- les esters vinyliques d'acide carboxyliques, parmi lesquels on peut citer l'acétate de vinyle, le versatate de vinyle, le propionate de vinyle, le butyrate de vinyle, le maléate de vinyle, l'acétate de vinyle étant tout particulièrement préféré.

Parmi les polyesters utilisables pour les films pour fumigation, on peut citer les polyesters bio-sourcés ou biodégradables, et de préférence encore ceux choisis parmi :
- les polylactides : par exemple, les polymères et copolymères de l'acide lactique (PLA) ou encore les polymères et copolymères de l'acide glycolique (PGA) ;
- les poly(hydroxyalcanoates), homo- ou co-polymères (ou PHA) : par exemple, les poly(hydroxybutyrates) (PHB), les copolymères d'hydroxybutyrate-valérate (PHBV), par exemple les poly(3-hydroxybutyrate)-poly(3-hydroxyvalérate), les copolymères d'hydroxybutyrate-hexanoate (PHBHx), et les copolymères hydroxybutyrate-hexanoate (PHBO) ;
- les succinates de poly(alkylène) (PAS), comme par exemple, le succinate de poly(éthylène) ou PES, et le succinate de poly(butylène) ou PBS ;
- d'autres polymères comme le succinate-adipate de poly(butylène) ou PBSA, l'adipate-téréphtalate de poly(butylène) ou PBAT, la poly(caprolactone) ou PCL, le poly(triméthylène-téréphtalate) ou PTT.

Le terme « biosourcé » ou « renouvelable » s'applique à une ressource naturelle dont le stock peut se reconstituer sur une période courte à l'échelle humaine, la ressource devant se renouveler aussi vite qu'elle est consommée. Dans le cadre de la présente invention, les matériaux bio-sourcés correspondent à des matériaux organiques dont les atomes de carbone proviennent de ressources non fossiles (cf. ASTM 6866 : « Biobased Materials - organic materials in which the carbon comes from contemporary (non-fossil) biological sources »)*.*

Le terme « biodégradable » s'applique à un matériau qui peut être dégradé par des micro-organismes. Le résultat de cette dégradation est principalement la formation d'eau, de dioxyde de carbone et/ou de méthane, ainsi qu'éventuellement de sous-produits (résidus, nouvelle biomasse), non toxiques pour l'environnement.

Pour les besoins de la présente invention, on utilise avantageusement les polyoléfines choisies parmi le polypropylène, le polyéthylène, les copolymères de l'éthylène et d'une α-oléfine, les copolymères éthylène/(méth)acrylate d'alkyle, les copolymères éthylène/esters vinyliques d'acides carboxyliques.

La couche polymère dont une polyoléfine et plus particulièrement le polyéthylène est de manière préférée le constituant principal, et avantageusement le constituant unique, comprend au moins un agent tackifiant ou résine tackifiante, comme indiqué précédemment.

En variante, les films pour fumigation utilisables dans le cadre de la présente invention peuvent comprendre une ou plusieurs autres couches polymères, ou être constitués d'un ou plusieurs autres polymères contenant au moins un agent tackifiant ou une résine tackifiante, lesdits polymères pouvant alors être choisis parmi les résines polaires azotées et/ou oxygénées, par exemple parmi les polyamides, les copolyamides, les copolymères éthylène - acétate de vinyle (EVOH), les polyesters et copolyesters, par exemple acide polyglycolique (PGA), les amidons thermoplastiques et les mélanges de deux ou plusieurs d'entre eux en toutes proportions.

Par « polyamide » on entend, au sens de la présente invention, un polymère ou copolymère comprenant les produits de condensation :
- d'un ou plusieurs amino-acides, tels les acides aminocaproïques, amino-7-heptanoïque, amino-11-undécanoïque et/ou amino-12-dodécanoïque ;
- d'un ou plusieurs lactames, tels que caprolactame, oenantholactame et/ou lauryllactame ;
- d'une ou plusieurs diamines, éventuellement sous forme de sels, telles l'hexaméthylène-diamine, la dodécaméthylènediamine, la métaxylylènediamine, le bis-*para*-aminocyclohexyl-méthane et/ou la triméthylhexaméthylène diamine avec un ou plusieurs diacides, par exemple choisi parmi les acides isophtalique, téréphtalique, adipique, azélaïque, subérique, sébacique et dodécanedicarboxylique ;
- ou des mélanges de ces monomères conduisant à des copolyamides.

Il est possible d'utiliser des mélanges de polyamide et/ou copolyamides.

Selon un mode de réalisation préféré, le film pour fumigation utilisable dans la présente invention comprend un polymère choisi parmi les polyamide-6, les polyamide-6,6, et les copolymères éthylène - acétate de vinyle, en particulier les copolymères saponifiés d'acétate de vinyle et d'éthylène (EVOH), ainsi que leurs mélanges.

Les films utilisables selon la présente invention doivent en outre présenter une résistance mécanique appropriée à la manipulation sur le terrain, résistance mécanique qui se concrétise par une manutention beaucoup plus aisée. Notamment, les films ne se percent pas et ne se déchirent pas, même lorsque le film posé sur le sol est foulé par les pieds des utilisateurs, manutentionnaires, agriculteurs et autres, mais aussi lors de la pose des lés de film sur les sols à protéger par les machines et appareils destinés à cet effet.

Selon encore une autre variante, les films utilisables dans le cadre de la présente invention peuvent être constitués ou peuvent comprendre un ou plusieurs autres polymères, et notamment de polymères dits de compatibilité qui sont généralement utilisés pour rendre compatibles les polymères entre eux ou deux couches de polymères entre elles, pour pouvoir être assemblés sous forme de film bi-couche ou multi-couches.

Il est en effet connu que certains polymères de natures différentes ne sont que peu compatibles entre eux, et les rendre solidaires est souvent difficile. Tel est en particulier le cas de films bi-couches ou multi-couches comprenant une couche à base de polyoléfine(s) et une couche à base de polyamide(s) (PA) ou d'EVOH, tel que par exemple les films PA/EVOH ou encore PA/EVOH/PA.

La compatibilisation, entre les polymères entre eux et/ou les couches de polymères entre elles, est décrite par exemple dans les demandes FR 2 291 225, EP 0 342 066 et WO2013030513, et les polymères qui peuvent être utilisés à cet effet sont avantageusement choisis parmi :
- les polymères à base de propylène, tels que les propylènes homopolymères, les copolymères du propylène avec l'éthylène ou un monomère comprenant de 4 à 10 atomes de carbone (par exemple butène, pentène, hexène, et autres), les polypropylènes hétérophasiques ou leurs mélanges, la synthèse de ces polymères pouvant être réalisée par tout procédé connu de l'homme du métier (par exemple en suspension, ou en phase gaz avec des catalyseurs de type Ziegler Natta ou metallocène) ;
- les polyéthylènes choisis parmi les homopolymères de l'éthylène ou les copolymères comprenant au moins 50% en moles d'éthylène et un ou plusieurs autres comonomères, lorsque le comonomère du copolymère est une α-oléfine, on préfère les α-oléfines ayant de 2 à 30 atomes de carbone, étant entendu qu'à titre de deuxième monomère, il peut être cité ceux choisis parmi :
   - les diènes, par exemple le 1,4-hexadiène, l'éthylidène norbornène, le butadiène,
   - les esters d'acides carboxyliques insaturés tels que par exemple les acrylates d'alkyle ou les méthacrylates d'alkyle, regroupés sous le terme (méth)acrylates d'alkyles, les chaînes alkyle de ces (méth)acrylates pouvant avoir jusqu'à 30 atomes de carbone, et parmi ces chaînes alkyle peuvent être citées les chaînes méthyle, éthyle, propyle, n-butyle, *sec*-butyle, iso-butyle, *tert*-butyle, pentyle, hexyle, heptyle, octyle, 2-éthylhexyle, nonyle, décyle, undécyle, dodécyle, tridécyle, tétradécyle, pentadécyle, hexadécyle, heptadécyle, octadécyle, nonadécyle, eicosyle, hencosyle, docosyle, tricosyle, tétracosyle, pentacosyle, hexacosyle, heptacosyle, octacosyle, nonacosyle, les esters d'acide carboxylique insaturés préférés étant les (méth)acrylates de méthyle, d'éthyle et de butyle ; et
   - les esters vinyliques d'acide carboxyliques, parmi lesquels on peut citer l'acétate de vinyle, le versatate de vinyle, le propionate de vinyle, le butyrate de vinyle, ou le maléate de vinyle, de préférence l'acétate de vinyle,
- le polyéthylène, le polypropylène, les copolymères éthylène/α-oléfine, par exemple éthylène/propylène, les copolymères éthylène/butène, tous ces produits étant greffés par des anhydrides d'acides carboxyliques insaturés tels que par exemple de l'anhydride maléique ou du méthacrylate de glycidyle,
- les copolymères éthylène / (méth)acrylate d'alkyle / anhydride maléique, l'anhydride maléique étant greffé ou copolymérisé,
- les copolymères éthylène / acétate de vinyle / anhydride maléique, l'anhydride maléique étant greffé ou copolymérisé,
- les copolymères éthylène / (méth)acrylate d'alkyle / méthacrylate de glycidyle, le méthacrylate de glycidyle étant greffé ou copolymérisé,
- les copolymères éthylène / acétate de vinyle / méthacrylate de glycidyle, le méthacrylate de glycidyle étant greffé ou copolymérisé,
- les copolymères éthylène / acide (méth)acrylique éventuellement leurs sels,
- le polyéthylène, le propylène ou les copolymères éthylène/propylène, ces polymères étant greffés par un produit présentant un site réactif avec les aminés, tels que par exemple anhydride maléique, époxy, et autres, ces copolymères greffés étant ensuite condensés avec des polyamides ou des oligomères polyamides ayant une seule extrémité amine, par exemple avec des oligomères mono-aminés de caprolactame, comme décrits par exemple dans les brevets US 5 070 145 et EP 0 564 338,
- des mélanges d'un ou plusieurs de ces polymères et/ou copolymères.

Comme indiqué précédemment une ou plusieurs couches, dans le cas de films multi-couches, du film fumigant utilisable dans le cadre de la présente invention peuvent contenir au moins un agent tackifiante ou résine tackifiante, incorporé(e)(s) selon les techniques connues de l'homme du métier.

En effet et comme indiqué précédemment, les films pour fumigation utilisables dans le cadre de la présente invention sont connus et disponibles dans le commerce ou facilement préparés selon des techniques bien connues de l'homme du métier, et par exemple selon les techniques habituelles d'extrusion, de co-extrusion de gaines, d'extrusion et co-extrusion de cast-films, d'extrusion-soufflage et autres, à l'aide d'une ou plusieurs extrudeuses, ou encore par mélanges de polymères selon les techniques usuelles de mélange à l'état fondu (bi-vis, Buss, monovis), et autres méthodes bien connues de l'homme du métier.

Les différents polymères et/ou copolymères constituants les films multi-couches selon l'invention peuvent contenir également un ou plusieurs additifs connus de l'homme du métier choisis parmi les antioxydants, les agents de protections U.V., les agents de mise en oeuvre, les agents pour éviter les défauts d'extrusion, les agents anti-buée, les agents anti-bloquants, les agents antistatiques, les agents nucléants et les colorants. Ces agents peuvent être ajoutés dans une ou plusieurs des couches constitutives des films de la présente invention, selon des techniques et dans des proportions massiques également bien connues de l'homme du métier.

En particulier, les films utilisables dans le cadre de la présente invention peuvent comprendre un ou plusieurs agents, organiques et/ou minéraux, de protection contre le rayonnement ultra-violet. En effet, les films de l'invention sont destinés à être exposés pendant de longues périodes au rayonnement solaire et sont ainsi susceptibles d'être dégradés sous l'effet du rayonnement ultra-violet (UV). S'ils ne sont pas protégés, cette dégradation se traduit par un film plastique devenant opaque et friable.

Selon un mode de réalisation préféré, les films utiles dans la présente invention peuvent également comprendre au moins un agent protecteur contre la dégradation due au rayonnement UV. De tels agents protecteurs sont bien connus de l'homme du métier et peuvent être choisis parmi les molécules type benzophénone ou benzotriazole, les molécules connues sous le nom de « HALS » (acronyme de « Hindered Amine Light Stabilizers » en langue anglaise), ainsi que les anti-UV minéraux, tels que par exemple le TiO₂ dans sa forme non photocatalytique.

Selon encore une variante de l'invention, les films pour fumigation utiles dans le cadre de la présente invention peuvent également comprendre un ou plusieurs et/ou une ou plusieurs couches polymères dites de « renfort », intercalée(s) ou non entre les couches polymères constitutives dudit film. Ces couches de renfort permettent de renforcer encore la structure du film pour fumigation.

La nature de ces couches de renfort peut être de tout type connu de l'homme du métier, et ces couches peuvent en particulier comprendre un ou plusieurs des polymères définis pour les couches polymères définies précédemment. Il doit être compris que l'adhésion de la ou des couche(s) de renfort peut être améliorée par incorporation dans ladite ou lesdites couche(s) d'au moins un compatibilisant, ou encore être co-extrudée(s) avec un polymère de compatibilité, comme décrit précédemment.

Selon encore une autre variante, l'invention concerne l'utilisation des films pour fumigation tels qu'ils viennent d'être décrits et comprenant en outre une ou plusieurs couches colorées. En effet, les films ou bâches plastiques couramment utilisés sur les sols ou les substrats de culture peuvent nécessiter d'être colorés, selon que l'on souhaite bénéficier de la température de l'air ou du sol, préserver un certain degré d'humidité ou autres.

Les films de la présente invention peuvent ainsi être constitué de, ou comprendre, une couche additionnelle colorée, blanche, noire, ou toute autre couleur définie selon les besoins et les conditions climatiques et édaphiques. De telles couches colorées peuvent être obtenues selon des techniques bien connues de l'homme du métier et par exemple, et de manière non limitative, à partir de mélanges-maîtres (« master-batches » en langue anglaise) à base de polyéthylène (PE) contenant un ou plusieurs pigments destinés à apporter la couleur, par exemple noir de carbone pour la couleur noire, dioxyde de titane pigmentaire pour la couleur blanche, etc.

La couche colorée peut comprendre, tout comme les autres éventuelles couches constitutives du film, au moins un agent tackifiant ou au moins une résine tackifiante, comme indiqué précédemment. Par ailleurs, dans le cas où la couche colorée et la couche adjacente ne sont pas compatibles entre elles, il est possible d'améliorer l'adhésion entre ces deux couches en utilisant un agent compatibilisant ou une couche de compatibilité, comme décrit précédemment.

L'épaisseur du film pour fumigation utilisable dans le cadre de la présente invention, qui comprend une ou plusieurs couches polymères, peut varier dans de grandes proportions. Toutefois, les différentes couches polymères assemblées doivent conférer une résistance mécanique acceptable au film, et leurs épaisseurs respectives ne doivent pas être trop importantes afin de ne pas rigidifier ledit film qui doit rester aisément manipulable. Ainsi, et à titre d'exemple non limitatif, l'épaisseur de chacune des couches polymères est généralement comprise entre environ 5 µm et environ 100 µm, de préférence entre 5 µm et 75 µm, de préférence entre 5 µm et 60 µm, de préférence encore entre 5 µm et 50 µm. En règle générale, l'épaisseur totale du film auto-adhésif utilisé dans le cadre de la présente invention est comprise entre 5 µm et environ 100 µm, de préférence entre 5 µm et 75 µm, de préférence entre 5 µm et 60 µm, de préférence encore entre 5 µm et 50 µm.

Les films pour fumigation tels qu'ils viennent d'être décrits peuvent être posés sur le sol soit avant de procéder à l'injection de fumigant(s), soit aussitôt après cette injection. Les propriétés tackifiantes des films pour fumigation exposés ci-dessus permettent d'assurer de manière particulièrement aisée et efficace une étanchéité aux vapeurs du fumigant, par exemple par superposition et collage des bandes (ou lés) de films, mais aussi par enfouissement dans la terre des bordures de films, et/ou toutes autres techniques connues de l'homme du métier.

Ainsi le procédé d'étanchéification selon la présente invention comprend également une étape d'injection d'au moins un fumigant immédiatement avant la pose du film, ou après la pose du film. Lorsque le fumigant est injecté avant la pose du film, l'injection est de préférence réalisée dans le sol, selon toutes techniques bien connues de l'homme du métier et par exemple à l'aide de coutres. Lorsque le fumigant est injecté après la pose du film, le fumigant est injecté selon toutes méthodes connues de l'homme du métier et par exemple par injection par goutte à goutte à même le sol.

Les films pour fumigation utilisables dans la présente invention peuvent être des films photocatalytiques comme décrits par exemple dans la demande de brevet JP 9-263502 ou encore la demande WO2013030513. Grâce à la présence de photocatalyseur, les films pour fumigation présentent, outre une bonne résistance mécanique et des propriétés d'effet barrière aux gaz, la capacité de photocatalyser le fumigant qui est emprisonné entre le sol et ledit film. Cette photocatalyse permet, grâce au rayonnement ultra-violet, par exemple du soleil, des lampes utilisées dans les serres et autres, la décomposition des composés organiques souvent toxiques et/ou malodorants qui sont utilisés pour la fumigation desdits sols.

Grâce aux films pour fumigation présentant des propriétés tackifiantes et permettant ainsi d'assurer une excellente étanchéité aux sols couverts par lesdits films, il est possible d'utiliser tout type de fumigants connus de l'homme du métier, choisis parmi les nématocides, herbicides, fongicides, insecticides, et bactéricides, par exemple ceux répertoriés dans « Pesticide Manual », 10th édition, Ed. Clive Tomlin.

Par « fumigant » dans la présente invention, on entend tout type de composé phytosanitaire remplissant à la fois au moins les deux conditions essentielles suivantes : (i) ne présenter, aux doses auxquelles il est actif, aucune phytotoxicité sur les cultures mises en place après le traitement et (ii) posséder la propriété essentielle et rare de ne pas être complètement absorbé dans les sols ou substrats de culture et de diffuser rapidement, sous la forme gaz, dans l'épaisseur du sol à traiter, les organismes phytopathogènes se trouvant souvent jusqu'à 50 centimètres au moins en-dessous de la surface dudit sol ou dudit substrat. De plus, pour des raisons évidentes de productivité, ainsi que pour limiter le risque de nouvelle infestation, le temps de traitement pendant lequel le fumigant agit doit être le plus court possible.

À titre d'exemples non limitatifs de fumigants, on peut citer le bromure de méthyle, l'iodure de méthyle, l'isothiocyanate de méthyle (MITC), l'isothiocyanate d'allyle (AITC), le 1,3-dichloropropène, la chloropicrine, l'éthanedinitrile (EDN), le fluorure de sulfuryle (SO₂F₂), la phosphine, le tétrathiocarbonate ou autres composés générateurs de MITC, comme par exemple le métam-sodium et le métam-potassium, ainsi que le tétrahydro-3,5-diméthyl-1,3,5-thiadiazine-2-thione (plus connu sous le nom de Dazomet), ainsi que certains composés soufrés, comme les sulfures d'alkyle, les disulfures de dialkyle, les polysulfures de dialkyle, les thiosulfinates et autres, ainsi que les mélanges de deux ou plusieurs d'entre eux en toutes proportions.

Tous ces composés fumigants sont connus et largement décrits dans la littérature. La demande internationale WO2002074083 décrit en particulier des fumigants à base de composés soufrés, et en particulier les composés répondant à la formule générale (I)

R-S(O)n-Sx-R' (I)

dans laquelle R est choisi parmi les radicaux alkyle et alcényle contenant de 1 à 4 atomes de carbone, n est égal à 0, 1 ou 2, x prend les valeurs allant de 0 à 4, bornes comprises, et R' est choisi parmi les radicaux alkyle et alcényle contenant de 1 à 4 atomes de carbone ou, seulement lorsque n = x = 0, R' peut représenter un atome d'hydrogène ou de métal alcalin.

Les fumigants cités ci-dessus, seuls ou en mélanges, et en particulier ceux de formule (I) ci-dessus, sont tout particulièrement adaptés à la fumigation de sols ou de substrats, en utilisation conjointe avec les films pour fumigation utilisables dans le cadre de la présente invention et décrits précédemment car ils remplissent trois conditions essentielles pour pouvoir être utilisés pratiquement en désinfection des sols ou des substrats : ils présentent des propriétés pesticides globales (nématocides, fongicides, herbicides, insecticides, bactéricides) ; ils sont capables de diffuser rapidement dans l'épaisseur du sol à traiter ; et ils conduisent à une concentration en gaz suffisante pour tuer les organismes phytopathogènes présents.

Parmi les fumigants connus aujourd'hui, on préfère pour les besoins de la présente invention ceux répondant à la formule (I) ci-dessus. En effet, comme substituts au bromure de méthyle, les composés de formule (I) sont d'autant plus intéressants que certains sont déjà présents dans la nature en provenance de la dégradation naturelle des crucifères et des alliums. En particulier, les thiosulfinates, inclus dans la formule générale (I), sont des produits émis naturellement lorsque l'on broie des alliums et, à ce titre, peuvent être utilisés en agriculture biologique.

D'autre part, les composés de formule (I) ne contiennent pas d'atomes d'halogènes générateurs de radicaux halogénés responsables de la destruction catalytique de l'ozone stratosphérique, les composés de formule (I) sont sans danger pour la couche d'ozone. Comme exemples non limitatifs de radicaux R et R', on peut citer les radicaux méthyle, propyle, allyle et 1-propényle.

Parmi les composés de formule (I), on préfère ceux pour lesquels n = 0, c'est-à-dire les composés répondant à la formule (I') :

R-S-Sₓ-R' (I')

dans laquelle R et R', identiques ou différents, de préférence identiques, représentent chacun indépendamment l'un de l'autre, un radical alkyle ou alcényle, de préférence alkyle, contenant de 1 à 4 atomes de carbone, et x représente 1, 2, 3 ou 4.

D'autres composés préférés sont les disulfures (n = 0, x = 1) et plus particulièrement le disulfure de diméthyle (DMDS).

Les fumigants décrits ci-dessus, et en particulier les composés de formule (I), décrits ci-dessus peuvent être utilisés à l'état pur ou sous diverses formes, par exemple en émulsions, en microémulsions, aqueuses, organiques ou hydro-organiques, sous forme de concentré émulsionnable, sous formes de produits micro-encapsulés, nano-encapsulés ou supportés par un solide, en solutions aqueuses, organiques, ou hydro-organiques, ou encore en mélange avec un ou plusieurs produits ayant une activité pour le traitement des sols ou des substrats.

Toutes les formulations définies ci-dessus peuvent être réalisées selon des méthodes bien connues de l'homme du métier. Ainsi, par exemple, les émulsions aqueuses et les microémulsions peuvent être obtenues en additionnant un ou plusieurs tensio-actifs au composé fumigant, puis en rajoutant au mélange obtenu une certaine quantité d'eau de façon à obtenir une émulsion stable ou une microémulsion.

Sont plus particulièrement adaptés à la préparation des émulsions aqueuses ou des microémulsions les tensio-actifs à caractère majoritairement hydrophile, c'est-à-dire ceux ayant une HLB ("Hydrophilic Lipophilic Balance") supérieure ou égale à 8, qui peuvent être de nature anionique, cationique, non ionique ou amphotère.

Comme exemples non limitatifs de tensio-actifs anioniques, on peut citer les sels de métal alcalin, alcalino-terreux, d'ammonium ou de triéthanolamine des acides alkyl-, aryl- ou alkylaryl-sulfoniques, des acides gras à pH basique, de l'acide sulfosuccinique ou des esters alkyliques, dialkyliques, alkylaryliques ou polyoxyéthylène-alkylaryliques de l'acide sulfosuccinique. On peut également citer les sels de métal alcalin ou alcalino-terreux des esters d'acide sulfurique, phosphorique, phosphonique ou sulfoacétique et d'alcools gras saturés ou insaturés, ainsi que leurs dérivés alkoxylés. D'autres tensio-actifs encore sont représentés par les sels de métal alcalin ou alcalino-terreux des acides alkylarylsulfuriques, alkylarylphosphoriques, alkylarylsulfoacétiques, ainsi que leurs dérivés alkoxylés.

Les tensio-actifs cationiques utilisables sont, par exemple, ceux de la famille des alkylammonium quaternaires, des sulfoniums ou des amines grasses à pH acide, ainsi que leurs dérivés alkoxylés, Comme exemples non limitatifs de tensio-actifs non ioniques, on peut citer les alkyl-phénol alkoxylés, les alcools alkoxylés, les acides gras alkoxylés, les esters gras de glycérol ou les dérivés gras du sucre.

Les tensio-actifs amphotères utilisables sont, par exemple, les alkyl-bétaïnes ou les alkyl-taurines. Les tensio-actifs préférés pour la préparation des émulsions aqueuses et des microémulsions sont les composés à base d'alkyl-benzène-sulfonate et d'alkyl-phénol alkoxylé.

Pour les formulations de fumigant(s) sous forme de solution, les solvants organiques utilisables sont les hydrocarbures, les alcools, les éthers, les cétones, les esters, les solvants halogénés, les huiles minérales, les huiles naturelles et leurs dérivés ainsi que les solvants polaires aprotiques tels que le diméthylformamide, le diméthylsulfoxide ou la N-méthylpyrrolidone. Conviennent particulièrement bien les solvants biodégradables, plus particulièrement les esters méthyliques des huiles de colza.

Selon une variante de la présente invention, deux ou plusieurs fumigants peuvent être utilisés, conjointement, en mélange, de manière alternée ou séquencée. En particulier peuvent être utilisés deux ou plusieurs fumigants ayant des activités complémentaires ou synergiques choisis parmi le 1,3-dichloropropène, l'EDN, le fluorure de sulfuryle (SO₂F₂), la phosphine, l'iodure de méthyle, la chloropicrine (Cl₃C-NO₂), le métam-sodium (CH₃-NHCS₂Na), le métam-potassium (CH₃-NHCS₂K), le tétrathiocarbonate de sodium (Na₂CS₄), le MITC (CH₃-NCS), l'AITC, le Dazomet (générateur de MITC), et les composés de formule (I), et en particulier les disulfures de dialkyle, par exemple le DMDS.

Dans le cadre de la présente invention, c'est-à-dire en association avec les films pour fumigation à propriétés tackifiantes décrits précédemment, les fumigants et les compositions les contenant peuvent être appliqués suivant l'une quelconque des méthodes classiques d'introduction de pesticides dans le sol, comme par exemple l'injection par coutres qui permet d'introduire le produit en profondeur, la pulvérisation sur le sol, le goutte à goutte par un système d'irrigation classique ou l'aspersion du type « sprinkler ». Après l'introduction du ou des produits fumigants dans le sol ou le substrat de culture, il est possible d'effectuer une répartition, par exemple par roto-bêche dans le cas d'une injection dans le sol.

Les doses de fumigant(s) généralement appliquées pour obtenir l'effet désiré se situent généralement entre 150 g/ha et 1000 kg/ha, de préférence entre 1 kg/ha et 750 kg/ha et dépendent de la nature du ou des fumigants utilisés, du degré d'infestation du sol, de la nature des ravageurs et des organismes phytopathogènes, du type de culture et de sol ou de substrat, et des méthodes d'application.

Aux doses indiquées ci-dessus, on observe l'effet pesticide général recherché (à la fois nématocide, fongicide, herbicide, insecticide et bactéricide) et aucun effet phytotoxique ou seulement négligeable. On ne sortirait pas du cadre de la présente invention en associant le traitement par un composé de formule (I) avec un traitement (simultané ou non) avec une ou plusieurs autres substances pesticides, insecticides et/ou fongicides et/ou avec un engrais.

La présente invention concerne également l'utilisation des films pour fumigation à propriétés tackifiantes tels qu'il viennent d'être décrits, dans les procédés de fumigation des sols ou substrats destinés aux cultures, en particulier aux cultures maraîchères et horticoles, telles que, par exemple et à titre non limitatif, fraises, salades, tomates, melons, concombres, aubergines, carottes, pommes de terre, banane, ananas, fleurs ornementales, mais aussi l'arboriculture et la vigne, et autres.

Les films utilisables dans le cadre de la présente invention peuvent également être utilisés sur des sols, des substrats ou plus simplement des articles qui ne sont pas nécessairement destinés aux cultures, mais qui subissent des infestations fongiques, et/ou des infestations d'insectes, nématodes, et autres insectes, larves, lentes, nuisibles. Les utilisations possibles sont par exemple, dans les domaines du stockage du bois, du foin, de la paille, de céréales, en plus généralement toute denrée alimentaire ou non et susceptible d'être dégradée par des fongis, des insectes, des larves, des nématodes et autres.

L'invention a également pour objet un kit de traitement par fumigation comprenant au moins un film barrière au fumigant et auto-adhésif (tackifiant) tel que décrit précédemment, et au moins un fumigant, de préférence au moins un composé organique volatil soufré, de préférence de formule (I) ou de formule (I'), de préférence encore ledit fumigant comprenant du disulfure de diméthyle.

Un autre objet de la présente invention concerne le procédé de fumigation d'un sol, d'un substrat cultivable ou d'un article, comprenant au moins les étapes suivantes :
a) application dans ledit sol, substrat ou article, et/ou à la surface dudit sol, substrat ou article, d'au moins un fumigant, tel qu'il vient d'être défini, et
b) couverture totale dudit sol, substrat ou article par un film tackifiant, tel que défini précédemment, avant ou après l'étape a).

Dans un mode de réalisation préféré, le procédé de fumigation selon l'invention comprenant au moins les étapes suivantes :
a) application dans ledit sol, substrat ou article, et/ou à la surface dudit sol, substrat ou article, d'au moins un fumigant, tel qu'il vient d'être défini, ;
b) couverture totale dudit sol, substrat ou article par un film tackifiant, tel que défini précédemment, avant ou après l'étape a) ;
c) traitement parfumigation en laissant ledit fumigant agir par lui-même sous ledit film, pendant une durée pouvant varier de quelques jours à plusieurs semaines ; et
d) retrait éventuel total ou partiel, ou simple perforation, dudit film.

Dans le procédé décrit ci-dessus, le terme « film tackifiant » désigne le film pour fumigation décrit précédemment dans la présente description. Comme indiqué précédemment, ledit film tackifiant peut comprend au moins un agent tackifiant et/ou au moins une résine tackifiante. Au moins une partie du film peut comprendre ledit au moins un agent tackifiant et/ou ladite au moins une résine tackifiante. En variante, la totalité du film est un film tackifiant, c'est-à-dire que ledit au moins un agent tackifiant et/ou ladite au moins une résine tackifiante et réparti uniformément dans ledit film tackifiant.

Comme indiqué précédemment, le film tackifiant, en totalité ou au moins en partie, peut être réparti sur la totalité ou au moins une partie du sol, substrat ou article, comme indiqué précédemment, du moment que la totalité dudit sol, substrat ou article, soit couverte de manière étanche par un film pour fumigation, l'étanchéité étant assurée de manière totale ou au moins partielle par un film tackifiant tel que défini précédemment.

Dans le procédé décrit ci-dessus, il est ainsi envisagé la possibilité d'injecter au moins un fumigant entre le film et le substrat. L'injection dans le sol du ou des fumigants peut être réalisée selon toute technique connue de l'homme du métier, et par exemple telles qu'elles ont été décrites précédemment.

Après l'étape de fumigation, le film tackifiant pour fumigation utilisé dans le procédé de l'invention peut être retiré, lorsque l'on considère que le(s) fumigant(s) a(ont) rempli son(leur) rôle. Le retrait peut être total ou partiel, voire rester en place. Dans ce dernier cas, le film peut être perforé en un ou plusieurs endroits prédéfinis, là où seront plantées les cultures, telles que les transplants par exemple.

L'avantage lié à l'utilisation d'un film tackifiant tel qu'il vient d'être défini est qu'il peut être déposé sur le sol, substrat ou article, avant ou après l'étape dite de fumigation, par exemple par simple déroulage du film sur ledit sol, substrat ou article, l'étanchéité étant assurée, par contact, éventuellement accompagné d'une pression plus ou moins forte, des lés (ou bandes) de films entre elles, avantageusement sur leurs zones de recouvrement (ou de chevauchement) respectives, afin d'éviter toute fuite du fumigant dans l'atmosphère, le fumigant devant être retenu, pendant la durée requise de fumigation entre le sol, substrat ou article et le film pour fumigation.

Lorsque le film pour fumigation utilisé est un film a effet photocatalytique, comme indiqué précédemment, l'action photocatalytique est assurée par exposition au rayonnement ultra-violet, par exemple la lumière directe du soleil ou encore par l'intermédiaire de lampes à rayonnement ultra-violet, utilisées par exemple pour les cultures en serres.

Le rayonnement ultra-violet a pour effet l'action photocatalytique des particules de photocatalyseur(s) présente dans tout ou partie du film pourfumigation, lequel photocatalyseur dégrade les vapeurs du ou des fumigants qui se dégagent du sol ou substrat traité. Après destruction photocatalytique des vapeurs du ou des fumigants, les films plastiques peuvent être retirés en totalité ou en partie des sols ou substrats pour permettre la plantation des cultures dans les sols ainsi traités par fumigation.

Selon encore un autre aspect, l'invention concerne un kit de traitement par fumigation d'un sol comprenant au moins un film tackifiant pour fumigation tel que défini précédemment, et au moins un fumigant, de préférence au moins un composé organique volatil soufré, de préférence de formule (I) ou de formule (I') telles que définies précédemment, et de préférence encore ledit fumigant est le disulfure de diméthyle ou DMDS.

Les exemples ci-dessous illustrent l'invention sans toutefois en limiter la portée définie par les revendications annexées.

### Fabrication du film, PE ou barrière, étirable et collant

Parmi les films plastiques connus et en particulier ceux utilisés dans les domaines de l'emballage alimentaire, de la protection des éléments stockés sur palettes ou de l'ensilage par exemple, les films sont souvent des films dits « étirables » et dotés de propriétés tackifiantes. Plus particulièrement un film extrêmement étirable et auto-adhésif (tackifiant, collant) peut alors être utilisé jusqu'à 180% de sa longueur initiale. Afin que le film soit optimisé pour l'étirage et le collage, il peut par exemple être constitué de deux ou plusieurs couches polymères, au moins une pouvant contenir un élastomère, et au moins une, identique ou différente, pouvant contenir un tackifiant, comme le PIB.

D'autres exemples de films pour fumigation et présentant des propriétés tackifiantes sont présentés ci-après :
Film n°1a : film barrière au gaz classique préparé par extrusion-soufflage, et contenant trois couches comme suit :

| |
|---|
| Polyéthylène |
| EVOH |
| Polyéthylène |

Film n°1b : film barrière au gaz classique préparé par extrusion-soufflage, dont une couche tackifiante :

| |
|---|
| Polyéthylène |
| EVOH |
| Polyéthylène + PIB |

Film n°1c : film barrière au gaz classique préparé par extrusion-soufflage, contenant quatre couches dont une couche tackifiante :

| |
|---|
| Polyéthylène |
| EVOH |
| Polyéthylène |
| Polyéthylène + PIB |

Film n°2a : film barrière au gaz photocatalytique transparent préparé par extrusion-soufflage, contenant trois couches comme suit :

| |
|---|
| Polyéthylène |
| EVOH |
| Polyéthylène + TiO₂ photocatalytique |

Film n°2b : film barrière au gaz, photocatalytique et transparent, avec couche tackifiante, préparé par extrusion-soufflage, et contenant quatre couches comme suit :

| |
|---|
| Polyéthylène |
| EVOH |
| Polyéthylène + TiO₂ photocatalytique |
| Polyéthylène + PIB |

Film n°3a : film barrière au gaz, photocatalytique coloré, préparé par extrusion-soufflage, et contenant quatre couches comme suit :

| |
|---|
| Polyéthylène |
| EVOH |
| Polyéthylène + TiO₂ photocatalytique |
| Polyéthylène + noir de carbone |

Film n°3b : film barrière au gaz, photocatalytique coloré, avec couche tackifiante, préparé par extrusion-soufflage, et contenant quatre couches comme suit :

| |
|---|
| Polyéthylène |
| EVOH |
| Polyéthylène + TiO₂ photocatalytique |
| Polyéthylène + noir de carbone + PIB |

Film n°3c : film barrière au gaz, photocatalytique coloré, avec couche tackifiante, préparé par extrusion-soufflage, et contenant cinq couches comme suit :

| |
|---|
| Polyéthylène |
| EVOH |
| Polyéthylène + TiO₂ photocatalytique |
| Polyéthylène + noir de carbone |
| Polyéthylène + PIB |

### Exemple d'application d'un film barrière au gaz « autocollant »

Pour ce test, des films tackifiants (ou auto-collants), correspondants au film n° 1b ci-dessus, à trois couches d'épaisseur totale 30 µm, de largeur 2,5 m et de longueur 100 m, sont utilisés. Deux séries de films sont obtenus par la technique dite « d'extrusion-soufflage », bien connue de l'homme du métier, en utilisant :
- pour la première série : un mélange-maître tackifiant Polyéthylène (PE)/PIB type PW 60, commercialisé par la société Polytechs, à raison de 5%, 10% et 15% (soit 3 films) en poids de mélange-maître tackifiant par rapport au poids total du film, et
- pour la deuxième série : un mélange-maître tackifiant Polyéthylène (PE)/PIB type PW 70, commercialisé par la société Polytechs, à raison de 5%, 10% et 15% (soit 3 films) en poids de mélange-maître tackifiant par rapport au poids total du film.

De nombreuses techniques peuvent être envisagées pour étendre un film et recouvrir un sol destiné à être fumigué avec un film étanche aux vapeurs de fumigant. Parmi ces techniques, on peut citer, à titre d'illustration, les trois techniques suivantes :

### Technique n°1

La pose du film est réalisée de manière conventionnelle avec une machine « filmeuse », par exemple une machine couramment utilisée pour le traitement par fumigation au bromure de méthyle et mettant en oeuvre un adhésif solvant ou hot-melt translucide. L'opération comprend la pose d'une première bande (ou lé) de film autocollant et barrière au fumigant, puis collage d'un second lé de film sur une partie de cette première bande de film, avec une largeur de chevauchement d'environ 10 cm à 30 cm.

### Technique n°2

Avec une machine filmeuse existante, du type de celle décrite par exemple dans la demande WO 2001/0119167, sont posées une première bande de film barrière au gaz (classique, non-tackifiant) et une seconde bande, en laissant un espace de largeur environ 5 cm à 20 cm entre ces deux lés. Ensuite, tout en posant la troisième bande, collage de la bande de film barrière au gaz autocollante (largeur environ 10 cm à 50 cm, typiquement 40 cm) entre les 2 bandes préalablement posées, par simple pression.

### Technique n°3

Avec machine filmeuse de la Technique 1 et/ou de la Technique 2, pose alternée de lés de film barrière non adhésif (non-tackifiant) et de film barrière auto-adhésif (tackifiant), avec des largeur de lés généralement de l'ordre de 3 mètres.

### Exemple d'application d'un film selon la Technique n°1

L'application des différents films a été réalisées suivant la technique n°1 à savoir à partir de la machine filmeuse utilisée pour le traitement par fumigation au bromure de méthyle.

Une première bande de film barrière auto-collant (film 1b)) est posée, puis une seconde bande de film barrière auto-collant (film 1b)) est collée sur le bord de cette première bande de film, par simple pression, et ainsi de suite, de manière à recouvrir toute la largeur du champ. La zone de chevauchement est d'environ 20 cm.

Tous les films tackifiants et barrière au fumigant tels qu'ils ont été décrits dans la présente invention ont un pouvoir tackifiant satisfaisant pour être utilisés dans la fumigation des sols, tout en assurant une étanchéité parfaite et retenir ainsi les vapeurs de fumigant sous le film, plus précisément entre le sol et le film, de sorte qu'aucune vapeur de fumigant, ou uniquement de très faibles quantités de fumigant s'échappe dans l'atmosphère.

L'utilisation selon la présente invention d'un film de fumigation auto-adhésif présente ainsi de très nombreux avantages, parmi lesquels on peut citer :
- possibilité de collage-décollage, de type « Post-it™ » donc facile à enlever et à repositionner. Le débâchage est également de ce fait rendu plus facile,
- possibilité d'utiliser la même filière de recyclage que pour le film pour fumigation classique,
- facilité de mise en oeuvre du film sans aucune gestion de l'adhésif pendant la fumigation : l'agent collant (ou tackifiant) est ajouté au film lors de sa fabrication, il n'est donc pas nécessaire d'ajouter un adhésif (type hot-melt ou adhésif solvanté) sur les bandes de films déjà positionnés sur le champ,
- maintien du nombre d'opérateurs identique à celui observé lors de la pose de films pour fumigation classiques,
- coût final (matière et horaire) inférieur, en comparaison avec les techniques de collage des bandes de films classiques.

## Revendications

1. Utilisation pour le traitement des sols par fumigation d'un film barrière au fumigant présentant, sur au moins une partie de sa surface externe ou sur au moins une partie de sa surface interne ou sur au moins une partie de ses surfaces externe et interne, au moins une zone continue autocollante ou auto-adhésive.

2. Utilisation selon la revendication 1, dans laquelle la zone continue autocollante du film, est une zone continue et parallèle à la plus grande longueur du film.

3. Utilisation selon la revendication 1 ou la revendication 2, dans laquelle le film comprend au moins une couche comprenant un polymère choisi parmi les polyoléfines, les polyamides et les polyesters, et au moins un agent tackifiant ou résine tackifiante.

4. Utilisation selon l'une quelconque des revendications 1 à 3, dans laquelle l'épaisseur du film barrière au fumigant et autocollant est comprise entre 5 µm et environ 100 µm, de préférence entre 5 µm et 75 µm, de préférence entre 5 µm et 60 µm, de préférence encore entre 5 µm et 50 µm.

5. Utilisation selon l'une quelconque des revendications 1 à 4, dans laquelle les sols traités par fumigation sont des sols ou des substrats destinés aux cultures maraîchères et horticoles, à l'arboriculture, à la vigne, et autres.

6. Procédé d'étanchéification d'un sol destiné à un traitement par fumigation ou en cours de traitement par fumigation ou qui a été traité par fumigation, le dit procédé consistant à recouvrir la totalité ou au moins une partie dudit sol d'un film barrière au fumigant présentant sur au moins une partie de sa surface externe ou sur au moins une partie de sa surface interne ou sur au moins une partie de ses surfaces externe et interne, au moins une zone continue auto-adhésive.

7. Procédé selon la revendication 6, dans lequel le film barrière au fumigant et auto-adhésif peut être appliqué selon au moins l'une des techniques suivantes :
a) pose d'un lé de film barrière au fumigant et auto-adhésif, chevauchant un autre lé dudit film barrière au fumigant et auto-adhésif, en effectuant éventuellement une pression sur la zone de chevauchement, simultanément ou après la pose du ou des lés de film barrière au fumigant et auto-adhésif,
b) pose simultanée d'un lé de film barrière au fumigant classique, c'est-à-dire non autocollant, et d'une petite bande de film barrière au fumigant et auto-adhésif, entre deux lés de film barrière au gaz classiques, c'est-à-dire non autocollant, en effectuant éventuellement une pression sur la petite bande de film auto-adhésif, simultanément ou après la pose du ou des lés de film barrière au fumigant,
c) pose alternée d'un lé de film barrière au fumigant et autocollant chevauchant un film barrière au fumigant classique, c'est-à-dire non autocollant, en effectuant éventuellement une pression sur la zone de chevauchement, simultanément ou après la pose des lés de film barrière au fumigant.

8. Procédé selon la revendication 6 ou la revendication 7, comprenant une étape d'injection d'au moins un fumigant immédiatement avant la pose du film, ou après la pose du film.

9. Procédé selon l'une quelconque des revendications 6 à 8, dans lequel le fumigant est choisi parmi le bromure de méthyle, l'iodure de méthyle, l'isothiocyanate de méthyle, l'isothiocyanate d'allyle, le 1,3-dichloropropène, la chloropicrine, l'éthanedinitrile, le fluorure de sulfuryle, la phosphine, le tétrathiocarbonate, le métam-sodium, le métam-potassium, le tétrahydro-3,5-diméthyl-1,3,5-thiadiazine-2-thione, les sulfures d'alkyle, les disulfures de dialkyle, les polysulfures de dialkyle, les thiosulfinates et autres, ainsi que les mélanges de deux ou plusieurs d'entre eux en toutes proportions.

10. Kit de traitement par fumigation d'un sol comprenant au moins un film barrière au fumigant et auto-adhésif et au moins un fumigant, de préférence au moins un composé organique volatil soufré, de préférence encore ledit fumigant comprend du disulfure de diméthyle.

## Patentansprüche

1. Verwendung eines Gassperrfilms zur Bodenbegasung, der, auf mindestens einem Teil seiner Außenfläche oder auf mindestens einem Teil seiner Innenfläche oder auf mindestens einem Teil seiner Außen- und Innenfläche, mindestens eine kontinuierliche selbstklebende oder selbsthaftende Zone aufweist.

2. Verwendung nach Anspruch 1,
wobei die kontinuierliche selbstklebende Zone des Films eine kontinuierliche Zone und parallel zur größten Länge des Films ist.

3. Verwendung nach Anspruch 1 oder Anspruch 2,
wobei der Film mindestens eine Schicht umfasst, die ein Polymer, ausgewählt aus Polyolefinen, Polyamiden und Polyestern, und mindestens ein klebrigmachendes Mittel oder klebrigmachendes Harz umfasst.

4. Verwendung nach einem der Ansprüche 1 bis 3,
wobei die Dicke des Gassperr- und selbstklebenden Films zwischen 5 µm und ungefähr 100 µm, vorzugsweise zwischen 5 m und 75 µm, vorzugsweise zwischen 5 µm und 60 µm, besonders bevorzugt zwischen 5 µm und 50 µm, liegt.

5. Verwendung nach einem der Ansprüche 1 bis 4,
wobei die begasten Böden oder Substrate sind, die für Obst- und Garten-, Baum-, Wein- und andere Kulturen bestimmt sind.

6. Verfahren zur Abdichtung eines Bodens, der für eine Begasung bestimmt ist, oder während einer Begasung, oder der begast wurde, wobei das Verfahren darin besteht, die Gesamtheit oder mindestens einen Teil des Bodens mit einem Gassperrfilm abzudecken, der, auf mindestens einem Teil seiner Außenfläche oder auf mindestens einem Teil seiner Innenfläche oder auf mindestens einem Teil seiner Außen- und Innenfläche, mindestens eine kontinuierliche selbsthaftende Zone aufweist.

7. Verfahren nach Anspruch 6,
wobei der Gassperr- und selbsthaftende Film gemäß mindestens einer der folgenden Techniken aufgebracht werden kann:
a) Platzieren einer Bahn des Gassperr- und selbsthaftenden Films, überlappend eine andere Bahn des Gassperr- und selbsthaftenden Film, indem gegebenenfalls ein Druck auf die Überlappungszone ausgeübt wird, gleichzeitig mit oder nach dem Platzieren der Bahn oder Bahnen des Gassperr- und selbsthaftenden Films,
b) gleichzeitiges Platzieren einer Bahn eines klassischen, das heißt nicht-selbstklebenden, Gassperrfilms und eines schmalen Bands des Gassperr- und selbsthaftenden Films, zwischen zwei Bahnen des klassischen, das heißt nicht-selbstklebenden, Gassperrfilms, indem gegebenenfalls ein Druck auf das schmale Band des selbsthaftenden Films ausgeübt wird, gleichzeitig mit oder nach dem Platzieren der Bahn oder Bahnen des Gassperrfilms,
c) abwechselndes Platzieren einer Bahn des Gassperr- und selbstklebenden Films, überlappend einen klassischen, das heißt nicht-selbstklebenden, Gassperrfilm, indem gegebenenfalls ein Druck auf die Überlappungszone ausgeübt wird, gleichzeitig mit oder nach dem Platzieren der Bahnen des Gassperrfilms.

8. Verfahren nach Anspruch 6 oder Anspruch 7,
umfassend einen Schritt des Einspritzens mindestens eines Gases unmittelbar vor dem Platzieren des Films, oder nach dem Platzieren des Films.

9. Verfahren nach einem der Ansprüche 6 bis 8,
wobei das Gas ausgewählt wird aus Methylbromid, Methyliodid, Methylisothiocyanat, Allylisothiocyanat, 1,3-Dichlorpropen, Chlorpikrin, Ethandinitril, Sulfurylfluorid, Phosphin, Tetrathiocarbonat, Metam-Natrium, Metam-Kalium, Tetrahydro-3,5-dimethyl-1,3,5-thiadiazin-2-thion, Alkylsulfiden, Dialkyldisulfiden, Dialkylpolysulfiden, Thiosulfinaten und anderen, sowie den Mischungen von zwei oder mehreren unter diesen in beliebigen Mengen.

10. Bodenbegasungs-Kit, umfassend mindestens einen Gassperr- und selbsthaftenden Film und mindestens ein Gas, vorzugsweise mindestens eine schwefelhaltige flüchtige organische Verbindung, wobei das Gas besonders bevorzugt Dimethyldisulfid umfasst.

## Claims

1. Use, for fumigation treatment of soils, of a fumigant barrier film having, on at least one portion of its outer surface or on at least one portion of its inner surface or on at least one portion of its outer and inner surfaces, at least one continuous self-adhesive or self-sticking area.

2. Use according to Claim 1, wherein the continuous self-adhesive area of the film is a continuous area parallel to the largest length of the film.

3. Use according to Claim 1 or Claim 2, wherein the film comprises at least one layer comprising a polymer selected from polyolefins, polyamides and polyesters, and at least one tackifying agent or tackifying resin.

4. Use according to any one of Claims 1 to 3, wherein the thickness of the self-adhesive fumigant barrier film is between 5 µm and about 100 µm, preferably between 5 µm and 75 µm, preferably between 5 µm and 60 µm, more preferably between 5 µm and 50 µm.

5. Use according to any one of Claims 1 to 4, wherein the soils treated by fumigation are soils or substrates intended for market-gardening and horticultural crops, for arboriculture, for grapevine, and others.

6. Method for sealing a soil intended for fumigation treatment or in the course of fumigation treatment or that has been treated by fumigation, said method consisting of covering the whole or at least one portion of said soil with a fumigant barrier film having at least one continuous self-adhesive area on at least one portion of its outer surface or on at least one portion of its inner surface or on at least one portion of its outer and inner surfaces.

7. Method according to Claim 6, wherein the self-adhesive fumigant barrier film may be applied by at least one of the following techniques:
a) placing a width of self-adhesive fumigant barrier film, overlapping another width of said self-adhesive fumigant barrier film, optionally applying pressure on the overlapping area, simultaneously or after placement of the width or widths of self-adhesive fumigant barrier film,
b) simultaneously placing a width of conventional, i.e. not self-adhesive, fumigant barrier film and a small strip of self-adhesive fumigant barrier film, between two widths of conventional, i.e. not self-adhesive, gas barrier film, optionally applying pressure on the small strip of self-adhesive film, simultaneously or after placement of the width or widths of fumigant barrier film,
c) alternately placing a width of self-adhesive fumigant barrier film overlapping a conventional, i.e. not self-adhesive, fumigant barrier film, optionally applying pressure on the overlapping area, simultaneously or after placement of the widths of fumigant barrier film.

8. Method according to Claim 6 or Claim 7, comprising a step of injecting at least one fumigant immediately before placing the film, or after placing the film.

9. Method according to any one of Claims 6 to 8, wherein the fumigant is selected from methyl bromide, methyl iodide, methyl isothiocyanate, allyl isothiocyanate, 1,3-dichloropropene, chloropicrin, ethanedinitrile, sulfuryl fluoride, phosphine, tetrathiocarbonate, metam-sodium, metam-potassium, tetrahydro-3,5-dimethyl-1,3,5-thiadiazine-2-thione, alkyl sulfides, dialkyl disulfides, dialkyl polysulfides, thiosulfinates and others, as well as mixtures of two or more of them in all proportions.

10. Kit for fumigation treatment of a soil comprising at least one self-adhesive fumigant barrier film and at least one fumigant, preferably at least one volatile sulfur-containing organic compound, and more preferably said fumigant comprises dimethyl disulfide.
